# EUROPEAN PATENT SPECIFICATION

(11) **EP 2 490 201 B1**
(45) Date of publication and mention of the grant of the patent: **14.10.2015**
(21) Application number: 11001426.3
(22) Date of filing: 21.02.2011
(51) Int. Cl.: G09B 9/46, G09B 9/32

(54) **Aircraft simulating apparatus**
Flugzeugsimulationsvorrichtung
Appareil de simulation d'avion

(43) Date of publication of application: 22.08.2012
(73) Proprietor: InfoCopter GmbH, 81249 München (DE)
(72) Inventor: Mayr, Peter, 81249 München (DE)
(74) Representative: WESER & Kollegen

(56) References cited:
- FR-A1- 2 680 017
- JP-A- 63 092 179
- US-A1- 2008 206 720

## Description

### Field of the Invention

The present invention relates an aircraft simulating apparatus, in particular to means for simulating the visual impression as seen by a pilot steering an aircraft, which may specifically be a helicopter.

### Related Art

Most known aircraft simulating apparatuses are used for simulating planes. Typical planes have a cockpit window providing only a small viewing angle of the environment. Hence, a respective simulating apparatus can be equipped with backlight monitors for visualization of the environment.

Some aircrafts such as helicopters or fighter jets have cockpit windows with large viewing angles. For simulating such aircrafts, other means are required for displaying wide angle views through the cockpit window.

Most common concepts are based on projection apparatuses. For example, as shown in FR 2 680 017 A1, a light-beam source provided with a fish-eye lens can be used for projecting an image on a projection screen in front of a cockpit window. Such a projection apparatus is limited to opening angles of less than 170°. A viewing angle through the cockpit window depends on this opening angle and is limited to less than the opening angle, e.g., less than 60° in the restricted space of a helicopter fuselage. Light-beam sources provided with fish-eye lenses are expensive and respective aircraft simulating apparatuses typically use projection screens with large extensions. Even with such projection screens, viewing angles are typically limited to less than 100°. Moreover, such projection screens fit only into large cabins which are substantially larger than the aircraft to be simulated. Such large cabins require heavy machinery for simulation of movements and are unsuitable for transportation. Moreover, their outer visual impression substantially differs from the fuselage of the aircraft to be simulated.

Other approaches, such as US 2008/206720 A1, are based on using multiple light-beam sources for providing a larger viewing angle. Such systems are expensive and suffer from the light-beam sources being in sight from a normal viewing direction of a user sitting in the cockpit. Moreover, all these approaches require large screens and large cabins, which substantially differ from the fuselage of the aircraft to be simulated.

### Summary of the Invention

An object of the present invention is to provide an aircraft simulation apparatus which is compact. Another object of the present invention is to provide an aircraft simulation apparatus which allows a wide horizontal and / or vertical view angle, such as typical for a fighter plane or a helicopter. Yet another object of the present invention is to provide an aircraft simulation apparatus which has an outer shape similar to an aircraft to be simulated.

In view of these objects, the present invention provides the aircraft simulating apparatus according to claim 1 and the aircraft simulating system according to claim 14. The dependent claims relate to further developments.

According to the present invention, the aircraft simulating apparatus comprises an optical projection apparatus with a light beam source and a projection screen.

Further comprised is a cabin, which includes in its interior a seat and a front window located between the seat and a front part of the cabin. The projection screen is located inside the cabin to be visible from the seat through the front window.

The cabin has an outer width in the range from 800mm to 4000mm, and the front edge of the seat is spaced apart from the front centered portion of the screen being most remote of the seat by a distance in the range from 1500mm to 3000mm.

This allows to provide an aircraft simulation apparatus which is compact. Moreover, with this configuration it is possible to provide an aircraft simulation apparatus which allows a wide horizontal and / or vertical view angle. Further, with this configuration it is possible to provide an aircraft simulation apparatus which has an outer shape similar to an aircraft to be simulated. Other objects and advantages will become apparent from the subsequent description, the claims and the Figures.

### Brief description of the drawings

Fig. 1 illustrates a side sectional view of an embodiment of an aircraft simulating apparatus according to the present invention.
Fig. 2 illustrates a top sectional view of the embodiment of the aircraft simulating apparatus according to the present invention.
Fig. 3 illustrates an embodiment of an aircraft simulating system, comprising an aircraft simulating apparatus.

### Detailed description of Embodiments

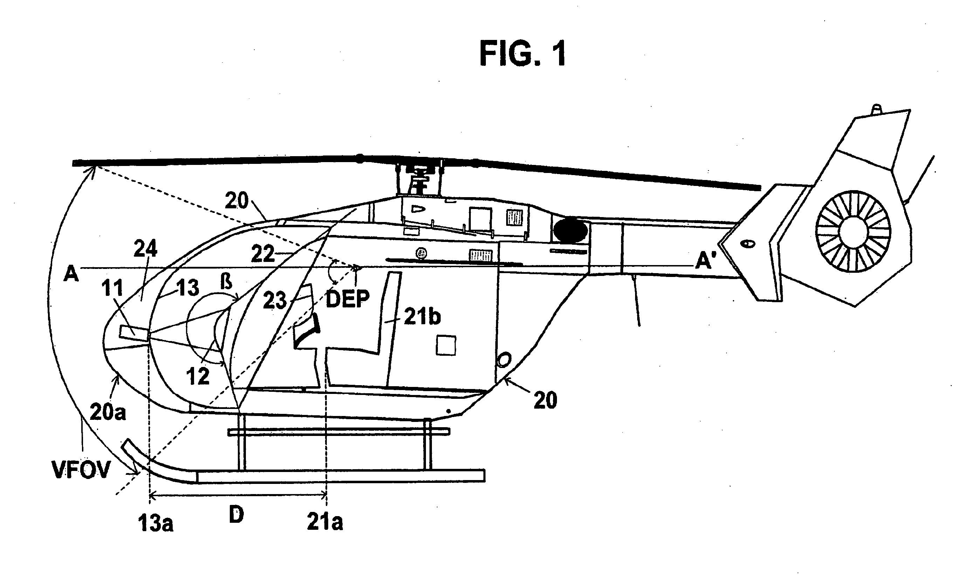

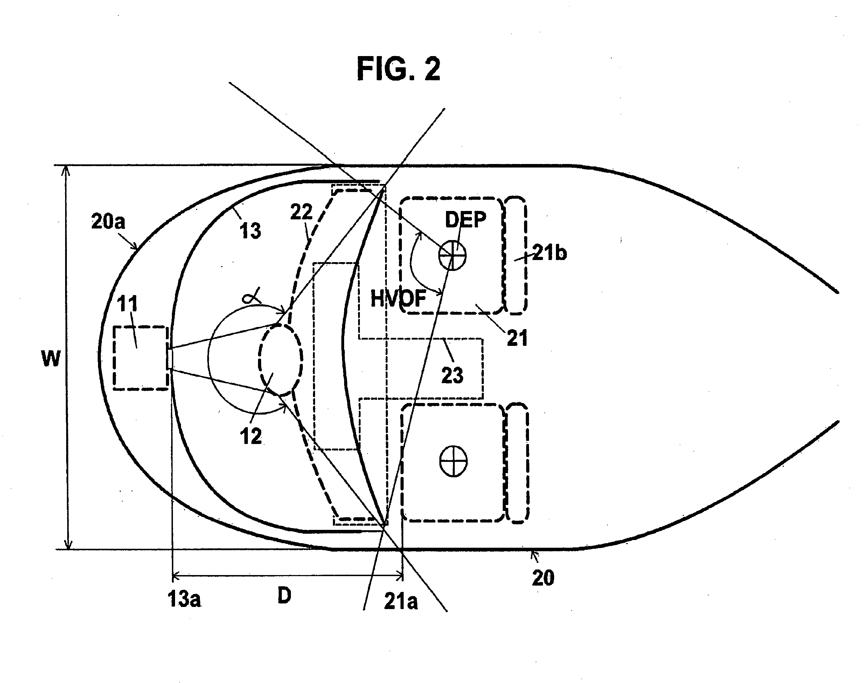

In the following, an aircraft simulating apparatus will be described with reference to Figs. 1 and 2.

Fig. 1 illustrates a side sectional view of an embodiment of an aircraft simulating apparatus according to the present invention. As shown therein, the aircraft simulating apparatus comprises an optical projection apparatus 11 and a cabin 20.

The cabin 20 may be formed of metal or any other robust material, which may be same or similar to materials used for forming aircraft fuselages. The cabin 20 forms a substantially closed environment in which undesired outside effects such as sound or light from external sources are reduced for a user located inside. The cabin 20 includes in its interior a seat 21 and a front window 22 located between the seat 21 and a front part of the cabin 20. The front window 22 simulates a cockpit window of an aircraft. The seat 21 specifies the position of the user in a position like a pilot.

The simulating apparatus has a designed eye point (DEP), which serves as a reference point for the user ergonomics, in particular all optical viewing systems, instruments, seat(s). The designed eye point DEP also serves as reference for the optical projection and view angles in horizontal and vertical sections, HFOV and VFOV, respectively. Also the image projection is optimized according to the designed eye point DEP. In Figs. 1 and 2, the designed eye point DEP is located above the seat 21, in the center above the seating surface in front of the backrest 21 b in a height corresponding to a typical head position of a sitting user, such as between 600mm and 900mm above the seating surface. The present invention is not limited to this exact position.

When operating the simulating apparatus, the user sits on the seat 21 and looks towards the front window 22 through which he can see an image which is projected onto a projection screen 13.

In Fig. 1, the viewing direction is towards the left. Further provided is an instrument panel 23 in front of the pilot. The instrument panel 23 is arranged below the level of the designed eye point DEP such that the center of the horizontal viewing range is not blocked. The projection screen 13 is located inside the cabin 20 to be visible from the seat 21 through the front window 22.

Fig. 2 illustrates a top sectional view of the embodiment of the aircraft simulating apparatus according to the present invention.

As shown therein, the present embodiment provides two seats in one row, for pilot and copilot. This is not limiting. For example, the first row may alternatively comprise only one seat, and the copilot is then seated one seat row behind.

The outer width W of the cabin 20 as seen from the front side is also indicated in the top view shown in Fig. 2. According to the present invention, the outer width W is in the range from 800mm to 4000mm, preferably from 1 500mm to 2500mm. This allows the cabin 20 to embrace the projection screen 13 and the projection screen 1 3 to embrace a front window 22 for aircrafts with one or more seats in the front row in a compact manner.

Thereby, it is possible that the cabin 20 is shaped like the fuselage of the aircraft to be simulated, and specifically, the front part 20a of the cabin is shaped like an aerodynamically shaped nose of an aircraft fuselage. In the shown embodiment, the cabin 20 is shaped like the fuselage of a helicopter, and the front part 20a of the cabin is shaped like an aerodynamically shaped nose of a helicopter fuselage.

Between the front edge 21 a of the seat and the front centered screen portion 13a being most remote from the seat 21, there is a distance D in the range from 1500mm to 3000mm, preferably from 1700mm to 2200mm.

Compared to the seat position in an aircraft or helicopter to be simulated, the seat position in the simulator cabin is shifted towards the back by about one meter or about one seat row. This shift allows to accommodate the optical projection apparatus with a light beam source 11, a mirror 1 2 and a projection screen 13 inside the cabin 20, while generating from the exterior as well as from the interior a general shape of a fuselage nose. In an alternative embodiment, the light beam source 11 may be held in front of the front of the cabin shaped as a fuselage nose. Then, a suitable entrance for the light beam is provided.

The light beam source 11 may be a projector such as a beamer which is also used for projection onto flat screens. The image source can provide moving images which are calculated by an image controller such as a computer with simulation software. The moving images are used to simulate a viewing environment from the aircraft cabin.

In Fig. 1, the light beam source 11 is located at a front part 20a of the cabin and arranged to emit a light beam in a direction towards the inner of the cabin 20. It can be supported by a support means which is attached to the front part 20a of the cabin. Moreover, it can be located in the interior of the cabin 20, between the inner side of the cabin wall and the projection screen 13 such that the light beam is passing through a hole in the projection screen 13.

During operation, the light beam source 11 produces heat which requires cooling. An air path 24 can be provided between the screen 13 and the inner side of the cabin wall. Through this air path 24, air can flow for effectively cooling the light beam source 11. The air flow can be effected by convection or by some means for blowing air. The air path 24 can have an entry port at a lower position of the cabin 20 and an exit port at an upper position of the cabin 20.

The light from the light beam source 11 is directed to a convex mirror 1 2, which is adapted to deflectively expand the light beam towards the projection screen 13.

The convex mirror 12 has a spherical shape with a polished surface. It can be made of aluminum or other highly reflective materials. The convex mirror 12 has a curvature radius in a range from 100mm to 1000mm, preferably from 200mm to 800mm, and more preferably from 250mm to 350mm.

The outer diameter of the convex mirror 12 is in a range from 100 to 800mm, preferably from 200mm to 600mm, and more preferably from 350mm to 450mm. This diameter is adapted to the distance of the convex mirror 12 from the light beam source 11 as well as the beam spread of the light beam source 11. The selected diameters allow usage of a conventional beamer having a relatively large spread of the light beam. Moreover, they provide a high quality projection onto the projection screen 13 with high demands on the surface quality of the mirror.

The position of the light beam source 11 relative to the convex mirror 12, the spread of the light beam, the curvature radius, and the diameter of the convex mirror 12 are adapted such that the optical projection apparatus provides, with a single of the above described light beam source 11, on the exit side of the convex mirror 12, an horizontal expansion angle α of more than 180° and a vertical expansion angle β of more than 120°.

The optical projection apparatus providing the above large expansion angles with only one single light beam source 11 has reduced costs with respect to prior art solutions which use plural light beam sources for providing such expansion angles. Moreover, a single light beam source 11 can be positioned out of sight from the designed eyepoint DEP located above the center of the seating area of the seat 21 in front of the backrest 21 b.

Due to the large expansion angles of the optical projection apparatus, the projection on the projection screen 13 can be distorted. The aircraft simulating apparatus further comprises an image processing means which is adapted process an image signal which is input to the light beam source 11 and compensates distortion of the optical projection on the projection screen 13 as seen from the designed eyepoint DEP. The image processing means can compensate different types of distortion, in particular pillow distortion.

Preferably, the projection screen 13 is shaped to cover the complete outer view angle through the front window 22 seen from the designed eyepoint DEP located above the center of the seating area of the seat 21 in front of the backrest 21 b. This avoids that a user can see the borders of the projected image which would reduce an illusion effect of the virtual reality. Preferably, the outer view angle through the front window 22 corresponds to a realistic view of the aircraft to be simulated.

For covering large viewing angles, a large extension of the projection screen 13 from the front centered portion 1 3a of the screen towards the seat 21 is required. Using a spherical screen would drastically increase the screen diameter. Such screen would not fit into a small cabin 20.

As shown in Fig. 1, the projection screen 13 is shaped to have a curvature radius which is increasing from the nose side to the front window side. This allows providing a large view angle without increasing the size of the cabin 20.

Moreover, with such projection screen 13, the front part 20a of the cabin can be shaped like an aerodynamically shaped nose of an aircraft fuselage, in particular a helicopter fuselage.

For producing such aspherical shape, the projection screen 1 3 can be made of glass-fibre reinforced plastics (GRP), however, the present invention is not limited thereto.

With the above described combination of front window 22 and projection screen 13, the seat 21 can be arranged to allow a horizontal viewing angle (HFOV) of at least 90°, more preferably at least 135°, and even more preferably at least 180°. Said arrangement further allows a vertical viewing angle (VFOV) of at least 50°, preferably at least 75°, and more preferably at least 100°. Both HFOV and VFOV are determined from the designed eye point DEP. Both HFOV and VFOV are restricted by the dimensions of the front window 22. The VFOV can be further restricted by an instrument panel 23 located before the seat 21.

The instrument panel 23 allows preventing direct sight from the designed eye point DEP into the light beam source 11. This is difficult to realize if plural light beam sources are used.

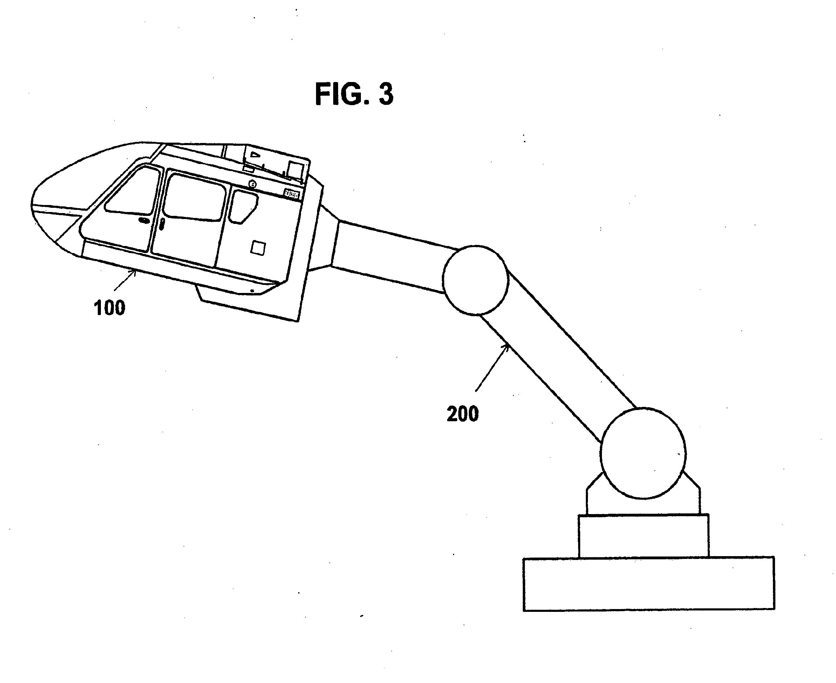

Fig. 3 illustrates an embodiment of an aircraft simulating system, comprising an aircraft simulating apparatus 100 attached to a holding means 200 such as a crane, which is capable of movably holding the simulating apparatus. In particular, the holding means 200 allows to execute movements so as to affect acceleration forces suitable for simulating forces during flight. Such configuration is possible due to the compact configuration of the simulating apparatus according to the present invention.

## Claims

1. Aircraft simulating apparatus, comprising
an optical projection apparatus with a light beam source (11) and a projection screen (13); and
a cabin (20), which includes in its interior a seat (21) and a front window (22) located between the seat and a front part of the cabin;
wherein the projection screen is located inside the cabin to be visible from the seat through the front window, and the front edge of the seat (21 a) is spaced apart from the front centered portion (13a) of the projection screen being most remote of the seat by a distance (D) in the range from 1500mm to 3000mm, preferably 1700mm to 2200mm,
**characterized in that**
the light beam source is located at a front part of the cabin (20a) and arranged to emit a light beam in a direction towards the inner of the cabin (20) to a convex mirror (12), which is adapted to deflectively expand the light beam towards the projection screen (13);
the light beam source (11) is arranged such that the light beam from the light beam source is passing through a hole in the projection screen (13); and
the cabin has an outer width (W) seen from the front side in the range from 800mm to 4000mm, preferably from 1500mm to 2500mm.

2. Apparatus according to claim 1, wherein the position of the light beam source (11) relative to the convex mirror (12), the spread of the light beam, the curvature radius, and the diameter of the convex mirror (12) are adapted such that the optical projection apparatus provides, with a single of the light beam source (11), on the exit side of the convex mirror (12), an horizontal expansion angle (α) of more than 180° and a vertical expansion angle (β) of more than 120°.

3. Apparatus according to claims 1 or 2, wherein the convex mirror (12) has spherical shape with curvature radius in a range from 100mm to 1000mm, preferably from 200mm to 800mm, more preferably to 250mm to 350mm.

4. Apparatus according to any one of claims 1 to 3, wherein an outer diameter of the convex mirror (12) is in a range from 100 to 800mm, preferably from 200mm to 600mm, more preferably to 350mm to 450mm.

5. Apparatus according to any one of the preceding claims, wherein the projection screen (13) is shaped to cover the complete outer view angle through the front window (22) seen from a designed eye point (DEP) located above the center of a seating area of the seat (21) in front of a backrest (21b).

6. Apparatus according to any one of the preceding claims, wherein the front part (20a) of the cabin is shaped like an aerodynamically shaped nose of a helicopter or aircraft fuselage, and the projection screen (13) is shaped to have curvature radius increasing from the nose side to the front window side.

7. Apparatus according to any one of the preceding claims, wherein the seat (21), front window (22) and projection screen (13) are arranged to allow a horizontal viewing angle (HFOV) of at least 90°, more preferably at least 135°, even more preferably at least 180°, as determined from a designed eye point (DEP) located above the center of a seating area of the seat (21) in front of a backrest (21b).

8. Apparatus according to any one of the preceding claims, wherein the seat (21), front window (22) and projection screen (13) are arranged to allow a vertical viewing angle (VFOV) of at least 50°, preferably at least 75°, more preferably at least 100° as determined from a designed eye point (DEP) located above the center of a seating area of the seat (21) in front of a backrest (21b).

9. Apparatus according to any one of the preceding claims, further comprising an instrument panel (23) located before the seat (21) and preventing direct sight from a designed eye point (DEP) located above the center of a seating area of the seat (21) in front of a backrest (21b) into the light beam source (11).

10. Apparatus according to any one of the preceding claims, further comprising image processing means adapted to process an image signal input to the light beam source (11) to compensate distortion of optical projection on the projection screen (13) as seen from a designed eye point (DEP) located above the center of a seating area of the seat (21) in front of a backrest (21b).

11. Apparatus according to any one of the preceding claims, wherein the light beam source (11) of the optical projection apparatus is located in the interior of the cabin (20), and an air path (24) for cooling the light beam source is provided between the screen (13) and the inner side of the cabin wall.

12. Apparatus according to any one of the preceding claims, wherein the front part (20a) of the cabin is shaped like an aerodynamically shaped nose of an aircraft fuselage.

13. Apparatus according to any one of the preceding claims, wherein the front part (20a) of the cabin is shaped like an aerodynamically shaped nose of a helicopter fuselage.

14. Aircraft simulating system, comprising the aircraft simulating apparatus (100) according to any one of the preceding claims; and holding means (200) for movably holding the aircraft simulating apparatus.

## Patentansprüche

1. Flugzeugsimulationsvorrichtung, mit:
einer optischen Projektionsvorrichtung mit einer Lichtstrahlquelle (11) und einer Projektionsleinwand (13); und
einer Kabine (20), die in ihrem Inneren einen Sitz (21) und eine Frontscheibe (22) aufweist, die sich zwischen dem Sitz und einem Frontteil der Kabine befindet;
wobei die Projektionsleinwand sich in der Kabine befindet, um von dem Sitz durch die Frontscheibe sichtbar zu sein, und die Vorderkante des Sitzes (21 a) ist von dem vorderen zentrierten Teil (13a) der Projektionsleinwand beabstandet, der von dem Sitz durch einen Abstand (D) im Bereich von 1500 mm bis 3000 mm, bevorzugt 1700 mm bis 2200 mm, am entferntesten ist,
**dadurch gekennzeichnet, dass**
sich die Lichtstrahlquelle an einem Frontteil der Kabine (20a) befindet und angeordnet ist, um einen Lichtstrahl in Richtung des Inneren der Kabine (20) an einen Konvexspiegel (12) auszugeben, der ausgelegt ist, den Lichtstrahl zur Projektionsleinwand (13) hin ablenkend auszudehnen;
die Lichtstrahlquelle (11) so angeordnet ist, dass der Lichtstrahl aus der Lichtstrahlquelle durch ein Loch in der Projektionsleinwand (13) hindurchgeht; und
die Kabine eine Außenbreite (W) hat, die von der Vorderseite im Bereich von 800 mm bis 4000 mm, bevorzugt von 1500 mm bis 2500 mm, gesehen wird.

2. Vorrichtung nach Anspruch 1, bei der die Lage der Lichtstrahlquelle (11) relativ zum Konvexspiegel (12), die Ausbreitung des Lichtstrahls, der Krümmungsradius und der Durchmesser des Konvexspiegels (12) so ausgelegt sind, dass die optische Projektionsvorrichtung mit einer einzelnen der Lichtstrahlquelle (11) einen horizontalen Expansionswinkel (α) von mehr als 180° und einen vertikalen Expansionswinkel (β) von mehr als 120° an der Ausgangsseite des Konvexspiegels (12) bereitstellt.

3. Vorrichtung nach Anspruch 1 oder 2, bei der der Konvexspiegel (12) eine Kugelform mit einem Krümmungsradius in einem Bereich von 100 mm bis 1000 mm, bevorzugt von 200 mm bis 800 mm, besonders bevorzugt von 250 mm bis 350 mm, aufweist.

4. Vorrichtung nach einem der Ansprüche 1 bis 3, bei der sich ein Außendurchmesser des Konvexspiegels (12) in einem Bereich von 100 mm bis 800 mm, bevorzugt von 200 mm bis 600 mm, besonders bevorzugt von 350 mm bis 450 mm, befindet.

5. Vorrichtung nach einem der vorhergehenden Ansprüche, bei der die Projektionsleinwand (13) so geformt ist, dass sie den vollständigen Außenblickwinkel durch die Frontscheibe (22) von einem konzipierten Augenpunkt (DEP) aus gesehen abdeckt, der sich oberhalb der Mitte eines Sitzbereichs des Sitzes (21) vor einer Rückenlehne (21b) befindet.

6. Vorrichtung nach einem der vorhergehenden Ansprüche, bei der das Frontteil (20a) der Kabine wie eine aerodynamisch geformte Nase eines Hubschrauber- oder Flugzeugrumpfes geformt ist, und die Projektionsleinwand (13) so geformt ist, dass sich der Krümmungsradius von der Nasenseite zur Frontscheibenseite vergrößert.

7. Vorrichtung nach einem der vorhergehenden Ansprüche, bei der der Sitz (21), die Frontscheibe (22) und die Projektionsleinwand (13) angeordnet sind, um einen horizontalen Blickwinkel (HFOV) von mindestens 90°, besonders bevorzugt mindestens 135°, und ganz besonders bevorzugt mindestens 180° zu ermöglichen, wie von einem konzipierten Augenpunkt (DEP) aus bestimmt, der sich oberhalb der Mitte eines Sitzbereichs des Sitzes (21) vor einer Rückenlehne (21b) befindet.

8. Vorrichtung nach einem der vorhergehenden Ansprüche, bei der der Sitz (21), die Frontscheibe (22) und die Projektionsleinwand (13) angeordnet sind, um einen vertikalen Blickwinkel (VFOV) von mindestens 60°, bevorzugt mindestens 75°, besonders bevorzugt mindestens 100° zu ermöglichen, wie von einem konzipierten Augenpunkt (DEP) aus bestimmt, der sich oberhalb der Mitte eines Sitzbereichs des Sitzes (21) vor einer Rückenlehne (21 b) befindet.

9. Vorrichtung nach einem der vorhergehenden Ansprüche, ferner mit einer Instrumententafel (23), die sich vor dem Sitz (21) befindet und direkte Sicht von einem konzipierten Augenpunkt (DEP) aus, der sich oberhalb der Mitte eines Sitzbereichs des Sitzes (21) vor einer Rückenlehne (21b) befindet, in die Lichtstrahlquelle (11) verhindert.

10. Vorrichtung nach einem der vorhergehenden Ansprüche, ferner mit Bildverarbeitungsmitteln, die ausgelegt sind eine Bildsignaleingabe an die Lichtstrahlquelle (11) zu verarbeiten, um die Verzerrung einer optischen Projektion auf der Projektionsleinwand (13) wie von einem konzipierten Augenpunkt (DEP), der sich oberhalb der Mitte eines Sitzbereichs des Sitzes (21) vor einer Rückenlehne (21b) befindet, aus gesehen, zu kompensieren.

11. Vorrichtung nach einer der vorstehenden Ansprüche, bei der sich die Lichtstrahlquelle (11) der optischen Projektionsvorrichtung im Inneren der Kabine (20) befindet, und ein Luftweg (24) zum Abkühlen der Lichtstrahlquelle zwischen der Leinwand (13) und der Innenseite der Kabinenwand vorgesehen ist.

12. Vorrichtung nach einem der vorhergehenden Ansprüche, bei der das Frontteil (20a) der Kabine wie eine aerodynamisch geformte Nase eines Flugzeugrumpfes geformt ist.

13. Vorrichtung nach einem der vorhergehenden Ansprüche, bei der das Frontteil (20a) der Kabine wie eine aerodynamisch geformte Nase eines Hubschrauberrumpfes geformt ist.

14. Flugzeugsimulationssystem mit der Flugzeugsimulationsvorrichtung (100) nach einem der vorhergehenden Ansprüche, und mit Haltemitteln (200), um die Flugzeugsimulationsvorrichtung verschiebbar zu halten.

## Revendications

1. Appareil de simulation d'aéronef, comprenant
un appareil de projection optique avec une source de faisceau lumineux (11) et un écran de projection (13) et
une cabine (20) qui comprend, dans son intérieur, un siège (21) et un hublot avant (22), situé entre le siège et une partie avant de la cabine ;
**caractérisé en ce que** l'écran de projection est situé à l'intérieur de la cabine pour être visible depuis le siège à travers le hublot avant et que le rebord avant du siège (21 a) est espacé par rapport à la partie centrée à l'avant (13a) de l'écran de projection, étant le plus éloigné du siège à une distance (D) comprise entre 1500 mm et 3000 mm, de préférence entre 1700 mm et 2200 mm,
**caractérisé par le fait que**
la source du faisceau lumineux est située sur une partie avant de la cabine (20a) et disposée pour émettre un faisceau lumineux dans une direction vers l'intérieur de la cabine (20) sur un rétroviseur convexe (12) qui est adapté pour diffuser le faisceau lumineux par réflexion en direction du l'écran de projection (13) ;
la source du faisceau lumineux (11) est disposée de manière à ce que le faisceau lumineux depuis la source du faisceau lumineux passe par un trou dans l'écran de projection (13) ; et
la cabine a une largeur extérieure (W), vue depuis l'avant, comprise entre 800 mm à 4000 mm, de préférence entre 1500 mm et 2500 mm.

2. Appareil conformément à la revendication n°1, **caractérisé en ce que** la position de la source du faisceau lumineux (11) relative au rétroviseur convexe (12), la vitesse du faisceau lumineux, le rayon de courbure et le diamètre du rétroviseur convexe (12) sont adaptés de telle manière à ce que l'appareil de projection optique fournisse, avec une seule source de faisceau lumineux (11), sur le côté sortie du rétroviseur convexe (12), un angle d'expansion horizontal (α) de plus de 180° et un angle d'expansion vertical (β) de plus de 120°.

3. Appareil conformément à la revendication n°1 ou n°2, **caractérisé par le fait que** le rétroviseur convexe (12) a une forme sphérique avec un rayon de courbure compris entre 100 mm et 1000 mm, de préférence entre 200 mm et 800 mm et idéalement entre 250 mm et 350 mm.

4. Appareil conformément à l'une des revendications n°1 à n°3, **caractérisé par le fait qu'**un diamètre extérieur du rétroviseur convexe (12) est compris entre 100 mm et 800 mm, de préférence entre 200 mm et 600 mm et idéalement entre 350 mm et 450 mm.

5. Appareil conformément à l'une des revendications précédentes, **caractérisé par le fait que** l'écran de projection (13) est façonné pour couvrir en intégralité l'angle de vue extérieur par le hublot avant (22), vu depuis un point oculaire (DEP) situé au-dessus du centre d'une zone d'assise du siège (21) devant un dossier (21b).

6. Appareil conformément à l'une des revendications précédentes, **caractérisé par le fait que** la partie frontale (20a) de la cabine est façonnée comme un nez de forme aérodynamique d'un hélicoptère ou d'un fuselage d'aéronef et que l'écran de projection (13) est façonné pour augmenter le rayon de courbure depuis le côté du nez vers le côté du hublot avant.

7. Appareil conformément à l'une des revendications précédentes, **caractérisé par le fait que** le siège (21), le hublot avant (22) et l'écran de projection (13) sont disposés pour permettre un angle de vue horizontal (HPOV) d'au moins 90°, idéalement d'au moins 135° et plus idéalement d'au moins de 180°, tel que déterminé par un point oculaire (DEP), situé au-dessus du centre d'une zone d'assise du siège (21) devant un dossier (21b).

8. Appareil conformément à l'une des revendications précédentes, **caractérisé par le fait que** le siège (21), le hublot avant (22) et l'écran de projection (13) sont disposés pour permettre un angle de vue vertical (VFOV) d'au moins 50°, de préférence d'au moins 75°, idéalement d'au moins 100°, tel que déterminé par un point oculaire (DEP), situé au-dessus du centre d'une zone d'assise du siège (21) devant un dossier (21b).

9. Appareil conformément à l'une des revendications précédentes, comprenant en outre un tableau de bord (23) situé devant le siège (21) et empêchant une vue directe dans la source du faisceau lumineux (11) depuis un point oculaire (DEP), situé au-dessus du centre d'une zone d'assise du siège (21) devant un dossier (21b).

10. Appareil conformément à l'une des revendications précédentes, comprenant un moyen de traitement d'images adapté pour traiter une entrée de signal d'image vers la source du faisceau lumineux (11) afin de compenser la distortion de la projection optique sur l'écran de protection (13), tel que vu depuis un point oculaire (DEP), situé au-dessus du centre d'une zone d'assise du siège (21) devant un dossier (21b).

11. Appareil conformément à l'une des revendications précédentes, **caractérisé par le fait que** la source du faisceau lumineux (11) de l'appareil de projection optique est située à l'intérieur de la cabine (20) et qu'un circuit d'air (24) pour le refroidissement de la source du faisceau lumineux est réalisé entre l'écran (13) et la face intérieure de la paroi de la cabine.

12. Appareil conformément à l'une des revendications précédentes, **caractérisé par le fait que** la partie frontale (20a) de la cabine est façonnée comme un nez de forme aérodynamique d'un fuselage d'aéronef.

13. Appareil conformément à l'une des revendications précédentes, **caractérisé par le fait que** la partie frontale (20a) de la cabine est façonnée comme un nez de forme aérodynamique d'un fuselage d'hélicoptère.

14. Système de simulation d'aéronef, comprenant l'appareil de simulation d'aéronef (100) conformément à l'une des revendications précédentes ; et un dispositif de retenue (200) pour un support mobile de l'appareil de simulation d'aéronef.
